# EUROPEAN PATENT APPLICATION

(11) **EP 0 905 616 A2**
(43) Date of publication of application: **31.03.1999**
(21) Application number: 98118391.6
(22) Date of filing: 29.09.1998
(51) Int. Cl.: G06F 9/45

(54) **Language processing system and method for generating an object program from a source program by use of two-step jump**

(30) Priority: 29.09.1997 JP 264301/97
(71) Applicant: NEC CORPORATION, Tokyo (JP)
(72) Inventor: Masuyama, Hiroyuki, Minato-ku, Tokyo (JP); Egashira, Roh, Minato-ku, Tokyo (JP)
(74) Representative: VOSSIUS & PARTNER

(57) **Abstract**

A language processing system constituted in that a head address analyzing unit (41) analyzes a head address at which a branch table should be provided in an erasable area of a memory, from a source program, a jump instruction position analyzing unit (42) analyzes a position at which a jump instruction is established within the branch table, from the source program, an call instruction generating unit (51) generates a call instruction for an address at which the jump instruction is established within the branch table, and a branch table generating unit (52) generates the branch table in the erasable area of the memory, based on the analysis result by the head address analyzing unit (41) and the jump instruction position analyzing unit (42).

## Description

The present invention relates to a language processing system and method for generating an object program from a source program, and more particularly to a language processing system and method by use of two-step jump.

In the conventional market relative to a disk such as a CD-ROM or the like, it is necessary to rewrite a program, for debugging or version-up of a program written into the CD-ROM or the like. Therefore, a method of providing a new CD-ROM having a rewrite program is adopted. With an increase of the demand, there arises a request for a microcomputer containing a "flash EEPROM" having an area erasable any number of times, for the purpose of debugging or version-up of a program written into the CD-ROM or the like. In this case, the debugged portion or version-up portion of a program written in the CD-ROM is written into a flash EEPROM and it is provided, thereby eliminating the need for supply of a new reprogrammed CD-ROM.

On the other hand, as a language tool, a technique relative to a compiler for "one-time EPROM" capable of rewriting data only one time in an empty area of the ROM is disclosed in Japanese Patent Publication Laid-Open (Kokai) No. Heisei 8-123679. Hereinafter, the details of this compiler will be described.

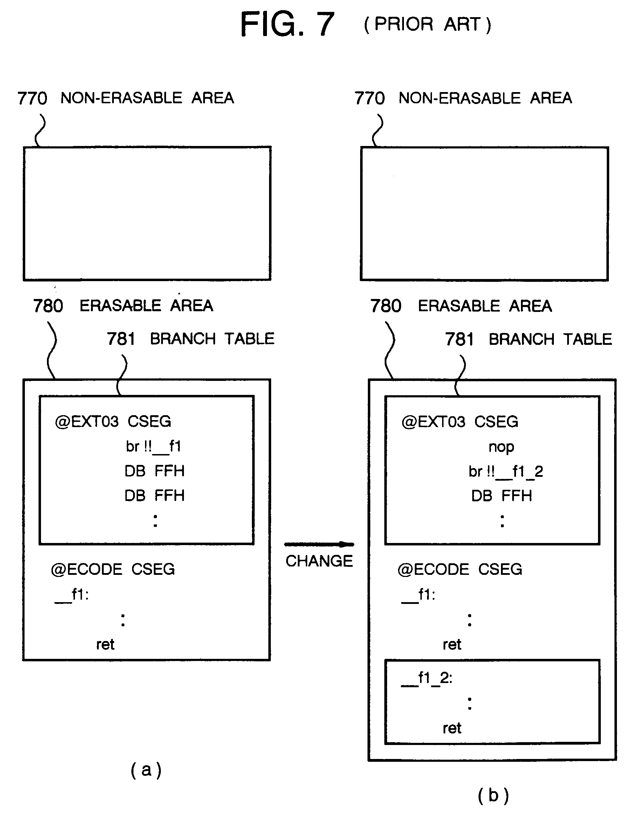

Fig. 7 is a memory map of a one-time EPROM for use in describing one example of the conventional language processing system, (a) showing a memory map before changing a program and (b) showing a memory map after changing a program.

As illustrated in Fig. 7, a control program or the like is written into a non-erasable area 770 of the one-time EPROM, and a branch table 781 having the writing of a jump instruction toward a head address of an executive program being written is provided in an erasable area 780. An empty area is provided behind the jump instruction of the branch table 781.

When calling the executive program written into the erasable area 780 according to the control program written in the non-erasable area 770, after writing an object program into the one-time EPROM by the above-mentioned compiler, the system once gains access from the control program in the non-erasable area 770 to the branch table 781, then jumping to the head address of a desired executive program ("f1" in Fig. 7(a)) according to the jump instruction written into the branch table 781, thereby to call the desired executive program and execute this program.

When changing the above executive program, the changed executive program is written into the empty area of the erasable area 780, and the jump instruction toward the head address ("f1_2" in Fig. 7(b)) of the executive program is written into the empty area of the branch table 781. The jump instruction written into the branch table 781 before the change is rewritten to a "nop (no operation)" instruction. According to the above-mentioned method, an executive program can be changed as far as there remains an empty area in the erasable area 780.

However, since the above-mentioned conventional language processing system is a compiler for the "one-time EPROM" capable of writing data only one time in an empty area of a ROM, it is impossible to reuse the area having been once used. Therefore, it is defective in that the number of times of changing an executive program is restricted.

Every time an executive program is changed, a useless space having an unused executive program is increased, and an empty area for writing a new jump instruction must be always provided in the branch table, thereby resulting in enlargement of the whole program.

A first object of the present invention is to provide a language processing system and method for generating an object program capable of changing an executive program without restriction on the number of times.

A second object of the present invention is to provide a language processing system and method for generating such an object program as would not leave a useless area having the writing of an unused executive program and would not have to provide an empty area for writing a new jump instruction in a branch table, even if changing an executive program written in the erasable area of the memory for writing the object program.

A third object of the present invention is to provide a language processing system and method capable of inhibiting enlargement of the whole program even if changing an executive program written in the erasable area.

According to the first aspect of the invention, a language processing system for generating an object program from a source program and writing the object program into a memory including an erasable area and a non-erasable area, comprises
branch table generating means for generating a branch table having a jump instruction for jumping to a given address in the erasable area of the memory, and
call instruction generating means for generating a call instruction for calling the jump instruction in the non-erasable area.

In the preferred construction, the language processing system further comprises syntax analyzing means for analyzing information on the branch table from the source program, wherein the branch table generating means generates the branch table, based on the analysis result in the syntax analyzing means.

In another preferred construction, the language processing system further comprises syntax analyzing means for analyzing information on the branch table from the source program,
the syntax analyzing means including head address analyzing means for analyzing a head address at which the branch table has to be established, and jump instruction position analyzing means for analyzing a position at which the jump instruction is established within the branch table,
   wherein the branch table generating means generates the branch table, based on the analysis result in the syntax analyzing means.

In another preferred construction, the branch table generating means generates the branch table including a jump instruction in the erasable area, by generating the jump instruction at the address of the jump instruction set position within the branch table corresponding to the analyzed head address.

In another preferred construction, the call instruction generating means generates a call instruction for the address of the jump instruction set position within the branch table corresponding to the analyzed head address.

In another preferred construction, the language processing system further comprises option analyzing means for analyzing the content of an operation and the source program entered from outward, and an object program file for storing an object program on which code generation has been performed in the branch table generating means and the call instruction generating means.

In another preferred construction, the language processing system further comprises syntax analyzing means for analyzing information on the branch table from the source program, option analyzing means for analyzing the content of an operation and the source program entered from outward, and an object program file for storing an object program on which code generation has been performed in the branch table generating means and the call instruction generating means,
the syntax analyzing means including head address analyzing means for analyzing a head address at which the branch table has to be established, and jump instruction position analyzing means for analyzing a position at which the jump instruction is established within the branch table,
   wherein the branch table generating means generates the branch table, based on the analysis result in the syntax analyzing means.

Preferably, the memory is a flash EEPROM.

According to the second aspect of the invention, a language processing method for generating an object program from a source program and writing the object program into a memory including an erasable area and a non-erasable area, comprising the steps of
analyzing a head address at which a branch table having a jump instruction for jumping to a given address in the erasable area of the memory has to be established, from the source program,
analyzing a position at which the jump instruction is established within the branch table, from the source program,
generating a call instruction for an address at which the jump instruction is established within the branch table, and
generating the branch table within the erasable area, based on the analysis result.

In the preferred construction, the branch table generating step generates the branch table including a jump instruction in the erasable area, by generating the jump instruction at the address of the jump instruction set position within the branch table corresponding to the analyzed head address.

In another preferred construction, a call instruction for the address of the jump instruction set position within the branch table corresponding to the analyzed head address is generated in the call instruction generating step.

According to the third aspect of the invention, a language processing method for generating an object program from a source program and writing the object program into a memory including an erasable area and a non-erasable area, comprising the steps of
in the language processing of the source program to be written in the non-erasable area of the memory,
analyzing a head address at which a branch table having a jump instruction for jumping to a given address in the erasable area of the memory has to be established, from the source program,
analyzing a position at which the jump instruction is established within the branch table, from the source program, and
generating a call instruction corresponding to an address at which the jump instruction is established within the branch table, while
in the language processing of the source program to be written in the erasable area of the memory,
analyzing a head address at which a branch table having a jump instruction for jumping to a given address in the erasable area of the memory has to be established from the source program,
analyzing a position at which the jump instruction is established within the branch table, from the source program, and
generating a branch table having a jump instruction for jumping to a given address of the erasable area of the memory, based on the analysis result.

In the preferred construction, the branch table generating step generates the branch table including the jump instruction in the erasable area, by generating the jump instruction at the address of the jump instruction set position within the branch table corresponding to the analyzed head address.

In another preferred construction, a call instruction for the address of the jump instruction set position within the branch table corresponding to the analyzed head address is generated in the call instruction generating step.

According to another aspect of the invention, a computer readable memory for storing a language processing program for generating an object program from a source program and writing the object program into a memory including an erasable area and a non-erasable area, the language processing program comprising the steps of
analyzing a head address at which a branch table having a jump instruction for jumping to a given address in the erasable area of the memory has to be established, from the source program,
analyzing a position at which the jump instruction is established within the branch table, from the source program,
generating a call instruction for an address at which the jump instruction is established within the branch table, and
generating the branch table within the erasable area, based on the analysis result.

Other objects, features and advantages of the present invention will become clear from the detailed description given herebelow.

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a memory map of a flash EEPROM on which an object program generated by a language processing system of the present invention is written, (a) is a memory map before changing a program, and (b) is a memory map after changing a program:
Fig. 2 is a block diagram showing the structure of a language processing system for generating an object program to be written on the memory map of the flash EEPROM shown in Fig. 1 according to the embodiment of the present invention;
Fig. 3 is a flow chart showing the language processing for a control program to be written in a non-erasable area according to the language processing system shown in Fig. 2;
Fig. 4 is a flow chart showing the language processing for an executive program to be written in an erasable area according to the language processing system shown in Fig. 2;
Fig. 5 is a view showing an example of an object program with no use of two-step jump, in calling an executive program;
Fig. 6 is a view showing an example of an object program to be generated by the language processing system of the present invention with use of two-step jump, in calling an executive program;
Fig. 7 is a memory map of a one-time EPROM for use in describing one example of the conventional language processing system, (a) is a memory map before changing a program, and (b) is a memory map after changing a program.

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

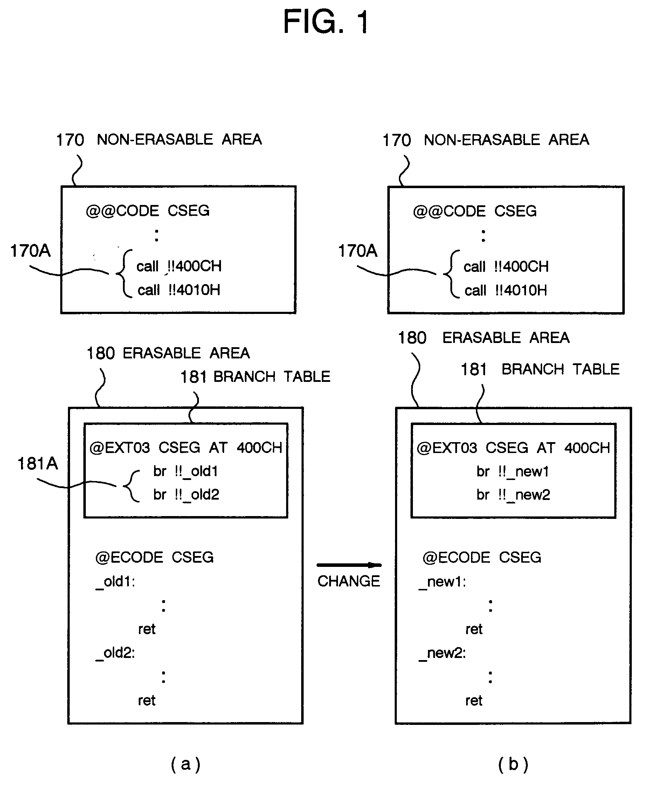

Fig. 1 shows an example of a memory map of a flash EEPROM on which an object program generated by a language processing system of the present invention is written. In Fig. 1, (a) is a memory map before changing a program, and (b) is a memory map after changing a program.

In the present form shown in Fig. 1, a control program or the like is written into a non-erasable area 170 of a flash EEPROM, and a branch table 181 including the writing about a jump instruction 181A toward a head address of an executive program being written is provided in an erasable area 180.

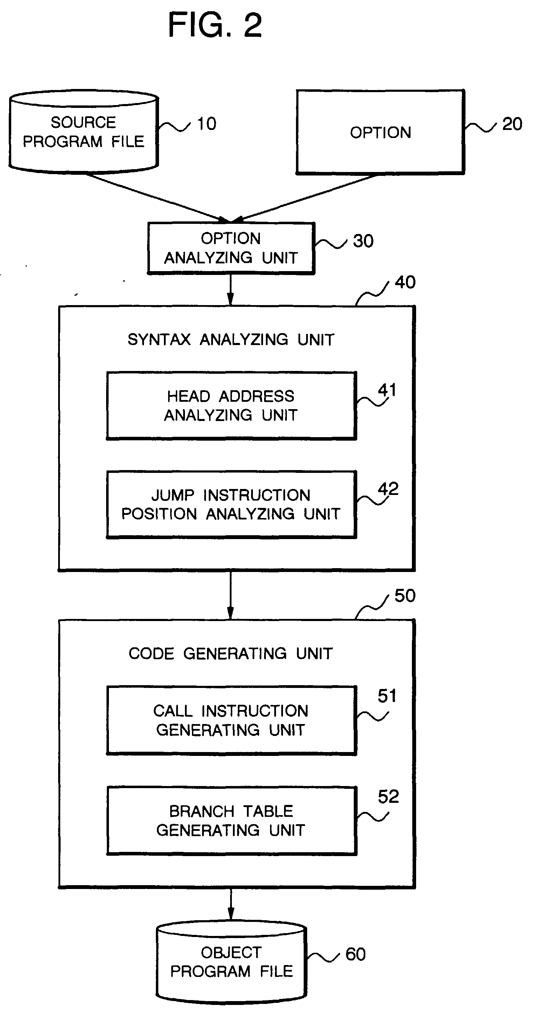

Fig. 2 is a block diagram showing the structure of the language processing system for generating an object program including an executive program and a control program to be written on the flash EEPROM of a memory map as shown in Fig. 1 according to the embodiment of the present invention.

As illustrated in Fig. 2, the language processing system comprises an option 20 for entering a command for instructing the processing from outward, a option analyzing unit 30 for analyzing a command entered from the option 20, a syntax analyzing unit 40 for analyzing a source program stored in a source program file 10, based on the analysis result by the option analyzing unit 30, a code generating unit 50 for generating codes so as to supply an object program, based on the analysis result by the syntax analyzing unit 40, and an object program file 60 for storing an object program supplied from the code generating unit 50.

Commands such as a code generating instruction with a source program specified, a display instruction of a source code of a source program, and the like are entered from the option 20. The commands from the option 20 are analyzed by the option analyzing unit 30, the syntax analyzing processing is performed by the syntax analyzing unit 40, and the code generation is performed by the code generating unit 50.

In addition to the ordinal syntax analyzing function, the syntax analyzing unit 40 includes a head address analyzing unit 41 for analyzing the head address at which the branch table 181 should be provided in the memory map shown in Fig. 1, and a jump instruction position analyzing unit 42 for analyzing the position at which a jump instruction is established in the branch table 181.

In addition to the ordinal code generation function, the code generating unit 50 includes an call instruction generating unit 51 for generating a call instruction for the absolute address at which a jump instruction is established within the branch table 181, in a non-erasable area 170, and a branch table generating unit 52 for generating a branch table 181 based on the analysis result by the syntax analyzing unit 40, in an erasable area 180.

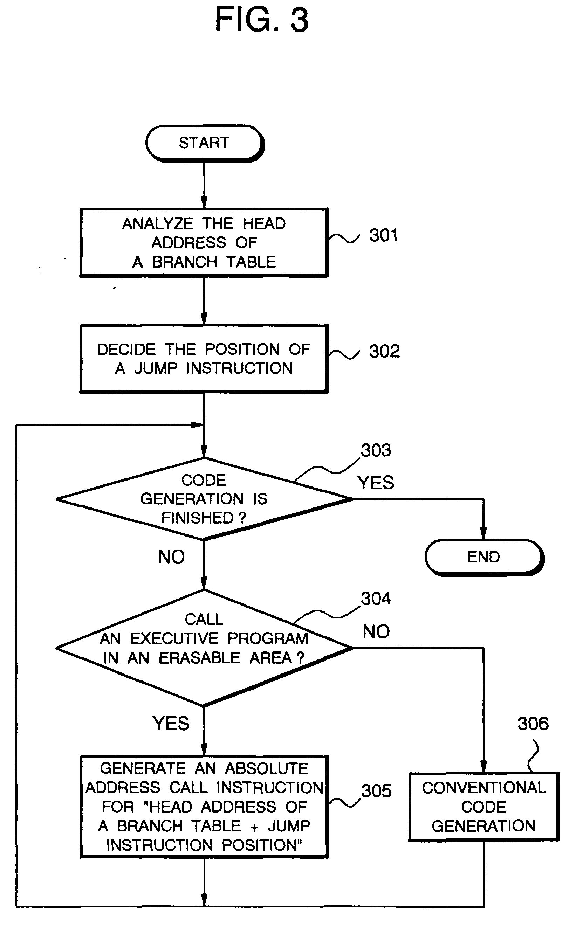

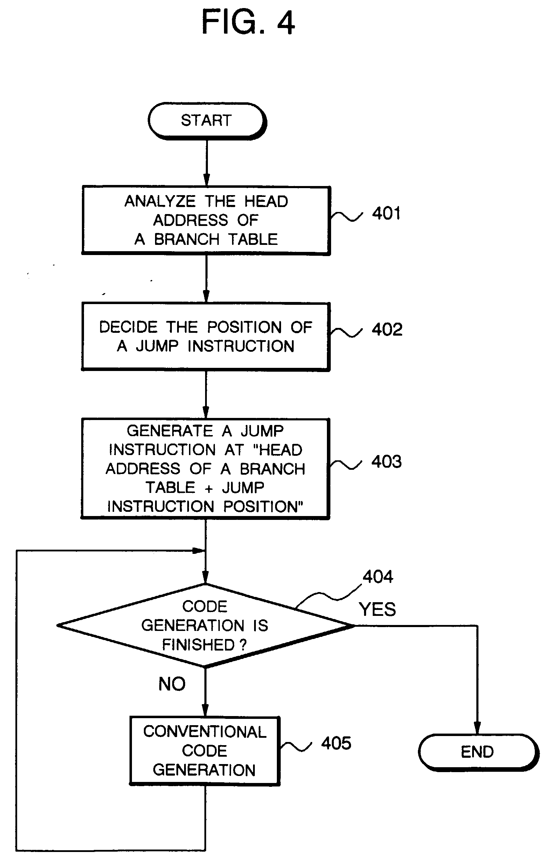

The content of the language processing by the language processing system of the embodiment constituted as mentioned above will be described below. Figs. 3 and 4 are flow charts for use in describing the language processing method in the language processing system shown in Fig. 2, Fig. 3 shows the language processing for a control program to be written into a non-erasable area of the flash EEPROM, and Fig. 4 shows the language processing for an executive program to be written into an erasable area of the flash EEPROM.

The language processing (compile processing) for a control program to be written into the non-erasable area 170 will be described according to Fig. 3.

A command for instructing the language processing with a source program specified is entered from the option 20. After analyzing the command from the option 20 in the option analyzing unit 30, the head address at which the branch table 181 is established in the erasable area 180 is analyzed from the source program, in the head address analyzing unit 41 of the syntax analyzing unit 40 (Step 301).

The position at which a jump instruction is established in the branch table 181 is analyzed from the source program, in the jump instruction position analyzing unit 42 of the syntax analyzing unit 40 (Step 302).

Thereafter, it is judged whether the code generation in the non-erasable area 170 has been finished or not (Step 303). When it is judged that the code generation has not been finished, it is further judged whether the executive program written in the erasable area 180 should be called or not (Step 304).

When it is judged that the executive program should be called in Step 304, a call instruction (170A of Fig. 1) for the absolute address at which a jump instruction is established in the branch table 181 is generated in the call instruction generating unit 51 of the code generating unit 50 (Step 305). Namely, a call instruction for the address of the jump instruction set position within the branch table 181 corresponding to the head address analyzed in Step 301 is generated.

On the other hand, when it is judged that the executive program should not be called in Step 304, the conventional code generation in the non-erasable area 170 is performed (Step 306), and after the processing in Step 305 or Step 306, it will return to the processing in Step 303. When it is judged that the code generation in Step 303 has been finished, the language processing for the control program to be written in the non-erasable area 170 is completed.

The language processing (compile processing) for an executive program to be written into the erasable area 180 will be described according to Fig. 4.

A command for instructing the language processing with a source program specified is entered from the option 20. After analyzing the command from the option 20 in the option analyzing unit 30, the head address at which the branch table 181 is established in the erasable area 180 is analyzed from the source program, in the head address analyzing unit 41 of the syntax analyzing unit 40 (step 401).

The position at which a jump instruction is established in the branch table 181 is analyzed from the source program in the jump instruction position analyzing unit 42 of the syntax analyzing unit 40 (Step 402).

In the branch table generating unit 52 of the code generating unit 50, a jump instruction is generated at the address of the jump instruction set position within the branch table 181 corresponding to the head address analyzed in Step 401, based on the analysis result by the head address analyzing unit 41 and the jump instruction position analyzing unit 42 of the syntax analyzing unit 40, and the branch table 181 including the jump instruction is generated within the erasable area 180 (Step 403).

Thereafter, it is judged whether the code generation has been finished in the erasable area 180 (Step 404), and when it is judged that the code generation has not been finished, the conventional code generation in the erasable area 180 will be performed (Step 405).

After the processing in Step 405, it will return to the processing in Step 404. When it is judged that the code generation has been finished in Step 404, the language processing for the executive program written into the erasable area 180 is completed.

An object program generated by the language processing (compile processing) as mentioned above is stored in the object program file 60. The object program is written into a memory map of the flash EEPROM as shown in Fig. 1, which is commercially produced. This flash EEPROM is used for debugging or version-up of a program written into a CD-ROM, for example, a car navigator.

In the above-mentioned embodiment, the description has been made in the case of a compiler using the two-step jump in order to call an executive program. This time, the description will be made, by comparison of the case of using the two-step jump to call an executive program and the case of not using the same.

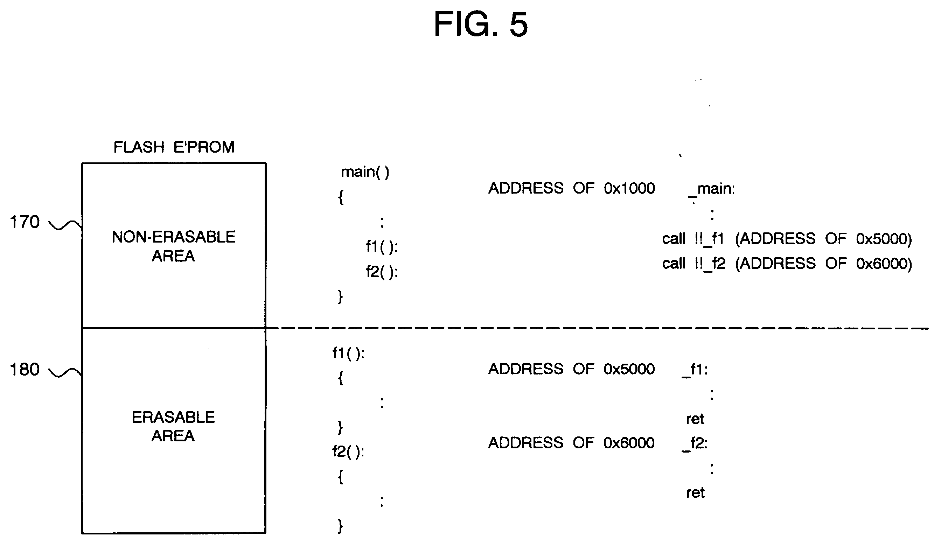

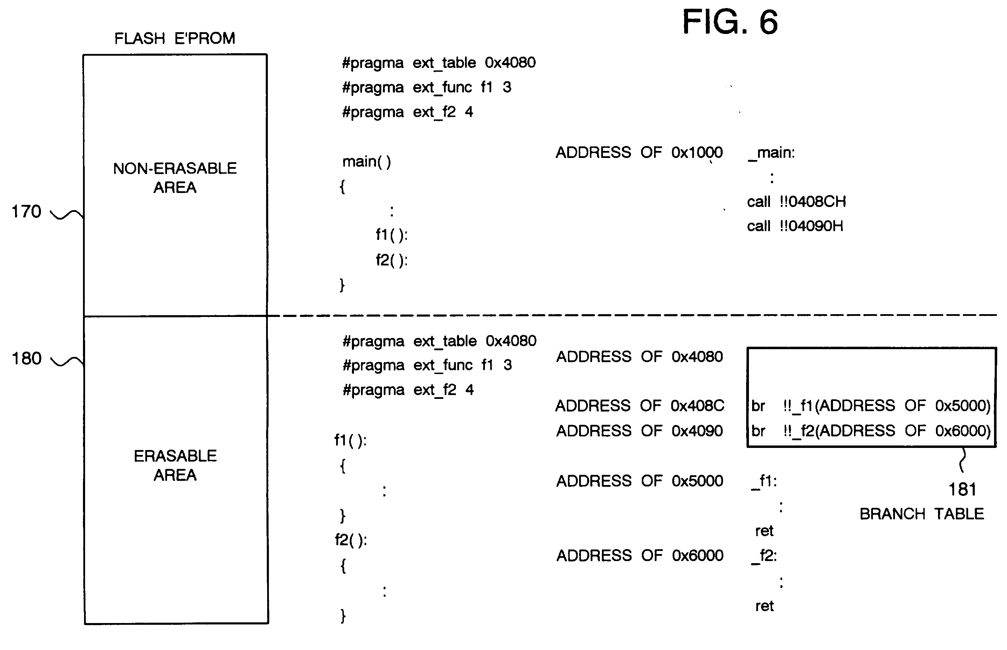

Figs. 5 and 6 are views for use in describing the two-step jump in calling an executive program, Fig. 5 is a view showing the case of non using the two-step jump, and Fig. 6 is a view showing the case of using the two-step jump.

In Fig. 5, an executive program "f1" written at the address of 0x5000 in the erasable area 180 is called by a call instruction "call !!_f1 (the address of 0x5000)" written in the non-erasable area 170. An executive program "f2" written at the address of 0x6000 in the erasable area 180 is called by a call instruction "call !!_f2 (the address of 0x6000)" written in the non-erasable area 170.

If the contents of the executive programs "f1" and "f2" are changed here, the respective head addresses of the executive programs "f1" and "f2" are changed. However, the call instructions for calling the respective head addresses of the executive programs "f1" and "f2" are written in the non-erasable area 170 and therefore there arises the case where the executive programs cannot be called by the instructions.

In Fig. 6 showing one example of an object program generated by the language processing system of the present invention, a call instruction "call !! 0408CH" written in the non-erasable area 170 once permits access to a jump instruction "br !!_f1 (the address of 0x5000) written in the branch table 181 at the address of 0408CH in the erasable area 180. The executive program "f1" written at the address of 0x5000 in the erasable area 180 is called by the jump instruction "br !!_f1 (the address of 0x5000)" written at the address of 0408CH.

Similarly, a call instruction "call !! 04090H" written in the non-erasable area 170 once permits access to a jump instruction written in the branch table at the address of 04090H in the erasable area 180. The executive program "f2" written at the address of 0x6000 in the erasable area is called by the jump instruction "br !!_f2 (the address of 0x6000)" written at the address of 04090H.

If the contents of the executive programs "f1" and "f2" are changed here, the respective head addresses of the executive programs "f1" and "f2" are changed, and when the respective jump instructions within the branch table 181 provided in the erasable area 180 are changed according to the head addresses thereof, the changed executive programs "f1" and "f2" can be called.

Thus, in the case of using the two-step jump for calling an executive program, access from the nonerasable area 170 to the erasable area 180 is permitted through the branch table 181 provided in the erasable area 180. Therefore, if changing an executive program written in the erasable area 180, the changed executive program such as "f1" or "f2" can be called surely, without changing an instruction written in the non-erasable area 170.

The language processing system of the embodiment can be realized by loading into a memory of a computer processor the language processing program including an operation processing part, a syntax analyzing part, and a code generating part. The language processing program is stored into a memory such as a magnetic disk, a semiconductor memory, or the like. The language processing program is loaded into a computer processor from the memory, so as to control the operation of the computer processor, thereby realizing the above-mentioned respective parts and executing the language processing.

As set forth hereinabove, since the present invention is designed to gain access from a non-erasable area to an erasable area through a branch table provided in the erasable area, even if changing an executive program written in the erasable area, it is possible to generate an object program capable of calling the changed executive program, without changing an instruction written in the non-erasable area.

Since a program can be rewritten any number of times in the erasable area of the memory for writing the object program, even if changing an executive program written in the erasable area, there hardly remains a useless area having the writing of an unused executive program, and there is no need of providing an empty area for writing a new jump instruction in a branch table.

Therefore, even if changing an executive program written in the erasable area, the present invention can inhibit enlargement of the whole program and change an executive program any number of times.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A language processing system for generating an object program from a source program and writing the object program into a memory including an erasable area and a non-erasable area, comprising:
branch table generating means (52) for generating a branch table having a jump instruction for jumping to a given address in the erasable area of the memory; and
call instruction generating means (51) for generating a call instruction for calling the jump instruction in the non-erasable area.

2. A language processing system as set forth in Claim 1, further comprising
syntax analyzing means (40) for analyzing information on the branch table from the source program,
wherein said branch table generating means (52) generates the branch table, based on the analysis result in said syntax analyzing means (40).

3. A language processing system as set forth in Claim 1, further comprising
syntax analyzing means (40) for analyzing information on the branch table from the source program,
said syntax analyzing means (40) including
head address analyzing means (41) for analyzing a head address at which the branch table has to be established, and
jump instruction position analyzing means (42) for analyzing a position at which the jump instruction is established within the branch table,
wherein said branch table generating means (52) generates the branch table, based on the analysis result in said syntax analyzing means (40).

4. A language processing system as set forth in Claim 1, 2 or 3, wherein
said branch table generating means (52) generates the branch table including a jump instruction in the erasable area, by generating the jump instruction at the address of the jump instruction set position within the branch table corresponding to the analyzed head address.

5. A language processing system as set forth in Claim 1, 2, 3 or 4, wherein
said call instruction generating means (51) generates a call instruction for the address of the jump instruction set position within the branch table corresponding to the analyzed head address.

6. A language processing system as set forth in any one of Claims 1 to 5, further comprising
option analyzing means (30) for analyzing the content of an operation and the source program entered from outward, and
an object program file (60) for storing an object program on which code generation has been performed in said branch table generating means and said call instruction generating means.

7. A language processing system as set forth in any one of Claims 1 to 6, further comprising
syntax analyzing means (40) for analyzing information on the branch table from the source program;
option analyzing means (30) for analyzing the content of an operation and the source program entered from outward, and
an object program file (60) for storing an object program on which code generation has been performed in said branch table generating means and said call instruction generating means,
said syntax analyzing means (40) including
head address analyzing means (41) for analyzing a head address at which the branch table has to be established, and
jump instruction position analyzing means (42) for analyzing a position at which the jump instruction is established within the branch table,
wherein said branch table generating means (52) generates the branch table, based on the analysis result in said syntax analyzing means (40).

8. A language processing system as set forth in any one of Claims 1 to 7, wherein
the memory is a flash EEPROM.

9. A language processing method for generating an object program from a source program and writing the object program into a memory including an erasable area and a non-erasable area, comprising the steps of:
analyzing a head address at which a branch table having a jump instruction for jumping to a given address in the erasable area of the memory has to be established, from the source program;
analyzing a position at which the jump instruction is established within the branch table, from the source program;
generating a call instruction for an address at which the jump instruction is established within the branch table; and
generating the branch table within the erasable area, based on the analysis result.

10. A language processing method as set forth in Claim 9, wherein
said branch table generating step generates the branch table including a jump instruction in the erasable area, by generating the jump instruction at the address of the jump instruction set position within the branch table corresponding to the analyzed head address.

11. A language processing method as set forth in Claim 9 or 10, wherein
a call instruction for the address of the jump instruction set position within the branch table corresponding to the analyzed head address is generated in said call instruction generating step.

12. A language processing method for generating an object program from a source program and writing the object program into a memory including an erasable area and a non-erasable area, comprising the steps of:
in the language processing of the source program to be written in the non-erasable area of the memory,
analyzing a head address at which a branch table having a jump instruction for jumping to a given address in the erasable area of the memory has to be established, from the source program;
analyzing a position at which the jump instruction is established within the branch table, from the source program; and
generating a call instruction corresponding to an address at which the jump instruction is established within the branch table, while
in the language processing of the source program to be written in the erasable area of the memory,
analyzing a head address at which a branch table having a jump instruction for jumping to a given address in the erasable area of the memory has to be established from the source program;
analyzing a position at which the jump instruction is established within the branch table, from the source program; and
generating a branch table having a jump instruction for jumping to a given address of the erasable area of the memory, based on the analysis result.

13. A language processing method as set forth in Claim 12, wherein
said branch table generating step generates the branch table including the jump instruction in the erasable area, by generating the jump instruction at the address of the jump instruction set position within the branch table corresponding to the analyzed head address.

14. A language processing method as set forth in Claim 12 or 13, wherein
a call instruction for the address of the jump instruction set position within the branch table corresponding to the analyzed head address is generated in said call instruction generating step.

15. A computer readable memory for storing a language processing program for generating an object program from a source program and writing the object program into a memory including an erasable area and a non-erasable area, the language processing program comprising the steps of:
analyzing a head address at which a branch table having a jump instruction for jumping to a given address in the erasable area of the memory has to be established, from the source program;
analyzing a position at which the jump instruction is established within the branch table, from the source program;
generating a call instruction for an address at which the jump instruction is established within the branch table; and
generating the branch table within the erasable area, based on the analysis result.

16. A computer readable memory as set forth in Claim 15, wherein
said branch table generating step generates the branch table including a jump instruction in the erasable area, by generating a jump instruction at the address of the jump instruction set position within the branch table corresponding to the analyzed head address.

17. A computer readable memory as set forth in Claim 15 or 16, wherein
a call instruction for the address of the jump instruction set position within the branch table corresponding to the analyzed head address is generated in said call instruction generating step.
